# EUROPEAN PATENT APPLICATION

(11) **EP 2 011 832 A1**
(43) Date of publication of application: **07.01.2009**
(21) Application number: 07741896.0
(22) Date of filing: 18.04.2007
(51) Int. Cl.: C08L 101/00, C08L 27/06, C08L 33/00, C08L 51/04, C08L 101/14

(54) **THERMOPLASTIC RESIN COMPOSITION AND PROCESS FOR PRODUCTION THEREOF**

(30) Priority: 26.04.2006 JP 2006121452
(71) Applicant: Kaneka Corporation, Kita-ku Osaka-shi, Osaka 530-8288 (JP)
(72) Inventor: KANDA, Toshihiko, Akashi-shi Hyogo 673-0003 (JP); YUI, Koji, Kobe-shi Hyogo 651-2113 (JP); AOKI, Yusuke, Takasago-shi Hyogo 676-0026 (JP)
(74) Representative: Vossius & Partner
(86) International application number: PCT/JP2007/058460
(87) International publication number: WO 2007/125805

(57) **Abstract**

In order to provide a novel thermoplastic resin composition capable of exhibiting high impact resistance using an impact modifier having good dispersibility and can be isolated as a resin powder without coarsening and agglomeration, and a process for preparing the same, the invention provides a thermoplastic resin composition comprising a thermoplastic resin (a) and 0.5 to 20 parts by weight of a graft copolymer (b) comprising a butadiene-based rubbery polymer and a hard shell based on 100 parts by weight of the thermoplastic resin (a), wherein the composition further comprises 0.01 to 3.0 parts by weight of an aqueous polymer compound (c) having a property to form a physical gel, and 0.01 to 10 parts by weight of a processing aid (d), per 100 parts by weight of the graft copolymer (b), and a process for preparing the thermoplastic resin.

## Description

### Technical Field

The present invention relates to a thermoplastic resin composition having excellent impact resistance and excellent appearance of a molded article obtained, and a process for preparing the composition.

### Background Art

To improve impact resistance of a thermoplastic resin, adding a graft copolymer obtained by an emulsion polymerization or a suspension polymerization method has conventionally been widely utilized. For example, in the case of a vinyl chloride-based resin, it is known to compound a graft copolymer comprising a diene or acrylate rubber.

Various methods of improving an effect of imparting impact resistance to a thermoplastic resin by a graft copolymer are known. Above all, it is known that a method of increasing the amount a rubber component in a graft copolymer is effective in its object. In particular, it is considered that increasing a weight proportion of a rubber component in a graft copolymer to 80% by weight or more is an effective method to highly impart impact resistance. However, when the weight proportion of a rubber component is 80% by weight or more, graft copolymer particles themselves become sticky, and as a result, coarsened particles are liable to be generated when recovering particles of a graft copolymer from an emulsion polymerization latex or a suspension polymerization slurry. Even through such a resin is compounded with a thermoplastic resin, there is the case that a sufficient effect of improving impact strength is not obtained, or appearance defect is induced. This is due to that the graft copolymer is not completely dispersed in a thermoplastic resin, and as a result, a structure in which polymer particles are microdispersed in the thermoplastic resin as planned is not formed. Such a phenomenon is confirmed by electron microscope observation of a molded article. Alternatively, undispersed particles may visually be observed, and this case results in inducing defective appearance of a molded article.

A method of co-isolating by mixing a graft copolymer latex and a dispersant latex, followed by spray drying or co-coagulation is known as a method of improving dispersibility of graft copolymer particles (Patent Document 1). However, the amount of a rubber component in a graft copolymer under consideration is low as about 60% by weight, and consideration is not made on a graft copolymer having the amount of a rubber component exceeding 80% by weight, in which deterioration of dispersibility is more liable to occur.

On the other hand, a method of co-coagulating a polymer emulsion is investigated to improve an effect of impact resistance achieved by a graft copolymer having a rubber component amount exceeding 80% by weight (Patent Document 2). However, a graft copolymer having a rubber component amount exceeding 80% by weight generally has low Vicat softening temperature, and coarsening or agglomeration occurs very easily when coagulating, and there is the difficult problem to recover as a powder. Furthermore, in the method under consideration here, a sticky polymer having low molecular weight and low glass transition temperature (hereinafter referred to as Tg) is added in an amount of 2 to 7 parts by weight. It is estimated that recovery as a powder becomes more difficult, and it is thought that such a method is a method difficult to carry out industrially.

On the other hand, a method of adding a high molecular weight polyanion having a carboxyl group and/or a hydroxyl group in the molecule to a rubber latex and adding dropwise the mixed latex to an aqueous solution containing at least one of alkaline earth metals is known as a method of recovering a resin powder having less stickiness from sticky rubbery polymer latex (see Patent Document 3).

However, it is described that this method cannot suppress adhesion of a resin powder recovered unless the high molecular weight polyanion is added in an amount of 2 to 8 parts by weight, and preferably 4 to 6 parts by weight, per 100 parts by weight of a rubber solid content in the rubber latex. In general, it can easily be assumed that where foreign matters (that is, high molecular weight polyanion in this case) are added to a polymer latex in an amount of 4 parts by weight or more, the recovered polymer composition used for various objects lose its original quality. Particularly, in the case of applying this method to a graft copolymer which is compounded with a thermoplastic resin or the like for imparting impact resistance to the resin and the compound amount of the graft copolymer is desired to be reduced as possible, deterioration of quality such as impact resistance is unavoidable. Furthermore, there is the problem that the polyanion firmly fixes the thermoplastic resin powder, the graft copolymer is difficult to be dispersed in the resin during mold processing, and the appearance of the molded article is deteriorated.

In other words, in the present situation, it is difficult to compatible to improve dispersibility of a graft copolymer having greatly increased amount of a soft rubber component in a thermoplastic resin with to recover industrially such a graft copolymer as a powder. By solving this, impact resistance is further improved, and development of a thermoplastic resin composition having good appearance after molding is expected.
Patent Document 1: Japanese Patent Laid-Open Publication No.3-115350
Patent Document 2: Korean Patent Laid-Open Publication No.2005-28516
Patent Document 3: Japanese Patent Laid-Open No.52-37987

### Disclosure of the Invention

### Problems to Be Solved by the Invention

The present invention has an object to provide a novel thermoplastic resin composition capable of exhibiting high impact resistance using an impact modifier having good dispersibility that can be isolated as a resin powder without coarsening and agglomeration, and a process for preparing the same.

### Means for Solving the Problems

As a result of earnest investigations in view of the above present situation, the present inventors have found that a resin composition comprising a thermoplastic resin (a) having compounded therewith a graft copolymer (b), an aqueous polymer compound (c) having a property to form a physical gel, and a processing aid (d) can exhibit excellent impact resistance, and have reached to complete the present invention.

That is, the present invention relates to a thermoplastic resin composition comprising 100 parts by weight of a thermoplastic resin (a) and 0.5 to 20 parts by weight of a graft copolymer (b), wherein the graft copolymer (b) comprises a butadiene-based rubbery polymer and a hard shell, and further comprises 0.01 to 3.0 parts by weight of an aqueous polymer compound (c) having a property to form a physical gel, and 0.01 to 10 parts by weight of a processing aid (d), per 100 parts by weight of the graft copolymer (b).

The preferred embodiment is that the processing aid (d) is a polymer obtained by polymerizing a monomer mixture comprising 0% to 100% by weight of a (meth) acrylic ester, 0% to 80% by weight of an aromatic vinyl monomer, and 0% to 20% by weight of other vinyl monomer copolymerizable with the (meth) acrylic ester and the aromatic vinyl monomer, and having a weight average molecular weight of 5,000 to 300,000.

The preferred embodiment is that the processing aid (d) is a polymer obtained by polymerizing a monomer mixture comprising 0% to 60% by weight of methyl methacrylate, 0% to 80% by weight of an aromatic vinyl monomer, 20% to 100% by weight of a (meth)acrylic ester excluding the methyl methacrylate, and 0% to 20% by weight of other vinyl monomer copolymerizable with those.

The preferred embodiment is that the glass transition temperature of the processing aid (d) is lower than 30°C, and preferably lower than 0°C.

The preferred embodiment is that the aqueous polymer compound (c) is one or more selected from the group consisting of hydroxyethylmethyl cellulose, hydroxypropylmethyl cellulose, carboxymethyl cellulose, aqueous alginic acid derivatives, agar, gelatin, carrageenan, glucomannan, pectin, curdlan, gellan gum and polyacrylic acid derivatives.

The preferred embodiment is that the thermoplastic resin (a) is a vinyl chloride-based resin.

Furthermore, the present invention relates to a process for preparing the thermoplastic resin composition, comprising obtaining a powder from a mixed latex of the processing aid (d) in a latex form and the graft copolymer (b) in a latex form, and compounding the powder with the thermoplastic resin (a).

### Effect of the Invention

The thermoplastic resin composition of the present invention has excellent appearance after molding and can exhibit high impact resistance by using an impact modifier isolated as a resin powder without coursing and agglomeration.

### Best Mode for Carrying Out the Invention

In the present invention, unless otherwise indicated, (meth)acryl means acryl and/or methacryl.

Furthermore, the glass transition temperature (hereinafter referred to as Tg) of a polymer in the present description can be measured with, for example, differential scanning calorimeter. However, the present invention uses a value calculated by Fox formula using the data described in Polymer Hand Book (J. Brandrup, Interscience 1989) (for example, polymethyl methacrylate is 105°C, polystyrene is 105°C, and polybutyl acrylate is -54°C) .

### (Thermoplastic resin composition)

The thermoplastic resin composition of the present invention is a thermoplastic resin composition containing 100 parts by weight of a thermoplastic resin (a) and 0.5 to 20 parts by weight of a graft copolymer (b), wherein the graft copolymer (b) comprises a butadiene-based rubbery polymer and a hard shell, and is a thermoplastic resin composition further containing 0.01 to 3.0 parts by weight of an aqueous polymer compound (c) having a property to form a physical gel and 0.01 to 10 parts by weight of a processing aid (d) per 100 parts by weight of the graft copolymer (b). Because the graft copolymer (b) that can exhibit excellent impact resistance even in a small amount is used, it is possible to achieve excellent properties that have conventionally been difficult to achieve, and cost balance.

The content of the graft copolymer (b) in the thermoplastic resin composition is more preferably 2 to 17 parts by weight, and particularly preferably 4 to 15 parts by weight, per 100 parts by weight of the thermoplastic resin (a) from quality standpoint and cost standpoint. Where the content of the graft copolymer (b) in the thermoplastic resin composition exceeds 20 parts by weight, an effect of improving impact resistance is sufficient, but there is the possibility that quality other than impact resistance deteriorates, and there is the case that cost arises. On the other hand, where the content of the graft copolymer (b) in the thermoplastic resin composition is less than 0.5 parts by weight, there is the case that sufficient effect of improving impact resistance is difficult to be exhibited.

Additives such as antioxidants, thermal stabilizers, ultraviolet absorbers, pigments, antistatic agents, lubricants or processing aids can appropriately be added to the thermoplastic resin composition of the present invention, if necessary.

A process for preparing the thermoplastic resin composition of the present invention is not particularly limited, and the conventional processes can be employed. For example, a process for obtaining a resin composition by previously mixing the thermoplastic resin (a), the graft copolymer (b), the aqueous polymer compound (c) having a property to form a physical gel, and the processing aid (d) (and other additives, if necessary) using Henschel mixer, tumbler or the like, and then melt kneading the resulting mixture using a single-screw extruder, a twin-screw extruder, Banbury mixer, a heating roll or the like can be employed.

### (Thermoplastic resin (a))

As the thermoplastic resin (a) that can be used in the present invention, for example, vinyl chloride-based resins, (meth)acrylic resins, styrenic resins, carbonate resins, amide resins, ester resins, olefinic resins and the like can preferably be used. However, the thermoplastic resin (a) is not limited to those.

As described hereinafter, the effect of improving impact resistance is achieved by the combination of the graft copolymer (b), the aqueous polymer compound (c) having a property to form a physical gel and the processing aid (d). Above all, this effect of the present invention becomes particularly excellent in the case that the thermoplastic resin (a) is a vinyl chloride-based resin. From this fact, the thermoplastic resin (a) is preferably a vinyl chloride-based resin. The vinyl chloride-based resin in the present invention means a vinyl chloride homopolymer or a copolymer containing at least 70% by weight of a unit derived from vinyl chloride.

### (Graft copolymer (b))

The graft copolymer (b) according to the present invention is not particularly limited so long as it is a graft copolymer having a butadiene-based rubbery polymer and a hard shell, and can be produced by, for example, an emulsion polymerization method, a suspension polymerization method, a microsuspension polymerization method, a miniemulsion polymerization method, an aqueous dispersion polymerization method or the like. Above all, a graft copolymer produced by an emulsion polymerization method can preferably be used from the point that it is easy to control structure.

Regarding the concept of a so-called core/shell structure of a butadiene-based rubbery polymer and a hard shell in the graft copolymer (b) in the present invention, generally a layer structure in which a rubbery polymer as a core portion is completely covered with a hard shell is general, but there is the case that the amount of a hard shell for forming a layer structure is insufficient depending on weight ratio or the like between the core portion and the hard shell. In such a case, it is not necessary to be a complete layer structure as above, and the structure may be a structure in which a part of the core portion is covered with the hard shell. Alternatively, a structure in which a monomer as a constituent of the hard shell is graft polymerized onto a part of the core portion can preferably be used. The concept of a multilayer structure in the above core/shell structure can similarly be applied to, for example, the case that a multilayer structure is formed in a core portion of the rubbery polymer.

In the case of producing the graft copolymer (b) by an emulsion polymerization method, a process for obtaining the graft copolymer (b) having the desired average particle diameter after completion of the graft polymerization includes a process in which a butadiene-based rubbery polymer is previously enlarged to an optional particle diameter, and then subjected to graft polymerization. Other than this process, a process for producing the graft copolymer (b) while enlarging particles during graft polymerization may be employed. A process for enlarging particles during graft polymerization is not particularly limited. Examples of such a process include a process in which a salt is previously added as an enlarging agent before graft polymerization and graft polymerization is carried out, and a process in which an acid, a salt, an acid group-containing latex, or the like is added as an enlarging agent during graft polymerization.

If needed, an antioxidant of phenol type, sulfur type, hindered amine type or the like can be added after polymerization of the graft copolymer (b).

### (Butadiene-based rubbery polymer)

The butadiene-based rubbery polymer in the graft copolymer (b) is not particularly limited so long as it is a polybutadiene rubbery polymer or a copolymer obtained by copolymerizing a butadiene monomer with a vinyl monomer or a mixture of vinyl monomers copolymerizable therewith. From the standpoint of impact resistance of the thermoplastic resin composition obtained, the proportion of butadiene units in the butadiene-based rubbery polymer is preferably 50% by weight or more, and more preferably 65% by weight or more. In the case that transparency is required in the thermoplastic resin obtained, it is preferred that difference between an refractive index of the butadiene-based rubbery polymer in the graft copolymer (b) and a refractive index of the thermoplastic resin is small. For example, where the thermoplastic resin is a vinyl chloride-based resin, it is preferred that the proportion of butadiene units in the butadiene-based rubbery polymer is 65% to 90% by weight. The vinyl monomer copolymerizable with the butadiene monomer is not particularly limited. For example, butyl acrylate, 2-ethylhexyl acrylate, styrene and acrylonitrile can preferably be used.

In the polymerization of those butadiene-based rubbery polymers, the butadiene monomer can be polymerized as a crosslinked butadiene-based rubber by a self-crosslinking effect of the butadiene monomer even thought a polyfunctional monomer is not used. However, if necessary, a polyfunctional monomer such as divinylbenzene, 1,3-butylene glycol dimethacrylate, allyl methacrylate or diallyl phthalate can appropriately be used as a crosslinking agent. Furthermore, if needed, a chain transfer agent such as n-dodecylmercaptan or t-dodecylmercaptan can be used.

The weight ratio of the butadiene-based rubbery polymer in the graft copolymer (b) is preferably 80% to 99% by weight, more preferably 84% to 98% by weight, and particularly preferably 87% to 98% by weight, from the standpoints of impact resistance and dispersibility in the thermoplastic resin.

The volume average particle diameter as the average particle diameter of the butadiene-based rubbery polymer is preferably 0.01µm to 1.0 µm, more preferably 0.03µm to 0. 5 µm, and particularly preferably 0.05µm to 0.3 µm, from the standpoint of impact resistance of the thermoplastic resin composition obtained. A process for obtaining the butadiene-based rubbery polymer having a volume average particle diameter within this range is not particularly limited. In the case of polymerizing the butadiene-based rubbery polymer by an emulsion polymerization method, a method of adding an acid, a salt, an acid group-containing latex, or the like as an enlarging agent during the polymerization or after the polymerization, a seed polymerization method, and the like can be exemplified. The volume average particle diameter can be measured by the conventional methods such as a light scattering method, but can be measured using, for example, MICROTRAC UPA (available from Nikkiso Co., Ltd.).

### (Hard shell)

In the present invention, the word "hard" of the "hard shell" means that the glass transition temperature of a polymer is 30°C or higher. The hard shell according to the present invention is not particularly limited so long as the glass transition temperature of the polymer is 30°C or higher. However, it is preferred that the glass transition temperature of a hard polymer is 50°C or higher from the following standpoints. Where the glass transition temperature of the hard shell is lower than 30°C, when the graft copolymer (b) in the present invention is compounded with a thermoplastic resin such as a vinyl chloride-based resin, compatibility with the thermoplastic resin deteriorates, and there is the case that remarkable effect of improving impact resistance is difficult to be exhibited, and furthermore, there is the case that coarsening and agglomeration of particles of the graft copolymer (b) are liable to occur.

The weight ratio of the hard shell in the graft copolymer (b) is preferably 1% to 20% by weight, more preferably 2% to 16% by weight, and particularly preferably 2% to 13% by weight. Where the weight ratio of the hard shell in the graft copolymer (b) exceeds 20% by weight, there is the tendency that an effect of improving impact resistance is poor. On the other hand, where the weight ratio of the hard shell in the graft copolymer (b) is less than 1% by weight, for example, when used as an impact modifier of a thermoplastic resin such as a vinyl chloride-based resin, compatibility between the graft copolymer (b) and the thermoplastic resin (a) deteriorates, and there is the tendency that an effect of improving impact resistance is difficult to be exhibited.

From the standpoint of dispersibility of the graft copolymer (b) in the thermoplastic resin (a), a hard polymer shell obtained by polymerizing a monomer or a monomer mixture comprising 0% to 100% by weight of a (meth) acrylic ester, 0% to 80% by weight of an aromatic vinyl monomer, 0% to 20% by weight of a vinyl cyanide monomer and 0% to 20% by weight of other monomer copolymerizable with those (meth) acrylic ester, aromatic vinyl monomer and vinyl cyanide monomer is preferably exemplified as the hard shell according to the present invention. To improve compatibility with the thermoplastic resin, a polymer obtained by polymerizing a monomer mixture comprising 40% to 100% by weight of a (meth) acrylic ester, 0% to 60% by weight of an aromatic vinyl monomer and 0% to 20% by weight of other monomer copolymerizable with those (meth)acrylic ester and aromatic vinyl monomer is more preferred. Of those monomers, in the case of using two kinds or more, the respective monomers may separately be introduced into a polymerization system en bloc or continuously, or may previously be mixed and introduced.

Examples of the (meth)acrylic ester include (meth)acrylic alkyl esters such as methyl (meth)acrylate, ethyl (meth)acrylate, propyl (meth)acrylate, butyl (meth)acrylate, 2-ethylhexyl (meth)acrylate, octyl (meth)acrylate, dodecyl (meth)acrylate, stearyl (meth)acrylate or behenyl (meth)acrylate; (meth)acrylic esters having hydroxyl group, such as 2-hydroxyethyl (meth)acrylate or 4-hydroxylbutyl (meth)acrylate; (meth)acrylic esters having epoxy group, such as glycidyl (meth)acrylate: and (meth)acrylic esters having alkoxyl group.

Above all, methyl (meth)acrylate, ethyl (meth)acrylate and butyl (meth)acrylate are preferably used from the point of industrial availability.

Examples of the aromatic vinyl monomer include styrene, α-methylstyrene, monochlorostyrene and dichlorostyrene. Above all, styrene is more preferred.

Examples of the vinyl cyanide monomer include acrylonitrile and methacrylonitrile. Above all, acrylonitrile is more preferred.

Examples of the other monomer copolymerizable with the (meth) acrylic ester, aromatic vinyl monomer and vinyl cyanide monomer include vinyl carboxylic acids such as acrylic acid or methacrylic acid; vinyl halides such as vinyl chloride, vinyl bromide or chloroprene; vinyl acetate; and maleimide compounds.

The monomers used for the formation of the hard shell may be used alone or two or more of them may be used in combination.

### (Aqueous polymer compound (c) having property to form physical gel)

In the present invention, an aqueous polymer compound (c) having a property to form a physical gel is contained together with the graft copolymer (b). The word "physical gel" used herein means a gel having physical cross-linkage formed by hydrogen bond, ionic bond, or chelating or the like between polymers. Furthermore, "having a property to form a physical gel" means that change from a viscous fluid (sol) to an elastomer (gel) is visually recognized by the addition of a gelling agent such as an inorganic salt or an acid to an aqueous solution of the aqueous polymer compound alone. In the present invention, the aqueous polymer compound (C) having a property to form a physical gel is defined as an aqueous polymer compound having the above property.

The aqueous polymer compound having a property to form a physical gel that can be used in the present invention is not particularly limited so long as the above property can be exhibited. For example, aqueous polymer compounds comprising one kind or a mixture of at least two kinds selected from the following groups can be used. For example, aqueous cellulose derivatives such as methylcellulose, hydroxylethylmethylcellulose, hydroxypropylmethylcellulose or carboxymethylcellulose; aqueous alginic acid derivatives such as alginic acid, sodium alginate, potassium alginate or ammonium alginate; agar, gelatin, carrageenan, and polyacrylic acid derivatives can be exemplified. In the present invention, among those, aqueous cellulose derivatives or aqueous alginic acid derivatives are more preferred in the sense of achieving its object. Above all, aqueous alginic acid derivatives are most preferably used.

The ratio between mannuronic acid and guluronic acid in the aqueous alginic acid derivatives is not particularly limited. However, there is the tendency that the ability for forming a physical gel is increased with the increase of the guluronic acid ratio, and this is preferred. The ratio of guluronic acid in the aqueous alginic acid derivatives is generally 5% by weight or more, and more preferably 30% by weight or more.

The content of the aqueous polymer compound (c) having a property to form a physical gel in the present invention is preferably 0.01 to 3.0 parts by weight, and more preferably 0.05 to 1.8 parts by weight, per 100 parts by weight of the graft copolymer (b) . Where the content of the aqueous polymer compound (c) having a property to form a physical gel is less than 0.01 parts by weight, there is the tendency that coarsening or agglomeration is liable to occur when recovering the graft copolymer used as an impact modifier, and where the coarsened or agglomerated graft copolymer is present, there is the tendency that an effect of imparting impact resistance deteriorates. Contrary to this, where the content of the aqueous polymer compound (C) having a property to form a physical gel is more than 3.0 parts by weight, an effect of suppressing coarsening and agglomeration when recovering the graft copolymer (b) is improved, but a large amount of the aqueous polymer compound (and/or materials originated from the aqueous polymer compound) remains together with the graft copolymer (b), and there is the tendency that an effect of imparting impact resistance and quality such as thermal stability at the time of mold processing deteriorate.

In the case of adding the aqueous polymer compound (c) having a property to form a physical gel in the thermoplastic resin composition of the present invention, it is effective to first compound the aqueous polymer compound (c) with the graft copolymer (b) and then compound the resulting mixture as an impact modifier with the thermoplastic resin.

The graft copolymer of the present invention may be coagulated particles and compose an impact modifier. The volume average particle diameter of the graft copolymer coagulated particles is not particularly limited so long as coarsening or agglomeration of the particles does not occur, and can be adjusted suitably according to supply form of production after drying the particles. For example, in the case of a vinyl chloride-based resin, generally a volume average particle diameter measured with MICROTRAC FRA-SVRSC (available from Nikkiso Co., Ltd.) is preferred to be within a range of 50 µm to 1.0 mm, and is more preferred to be 75 µm to 750 µm.

That is, it is preferred in the present invention that the aqueous polymer compound (c) having a property to form a physical gel is used in a form of being contained in the graft copolymer (b). A method for containing the aqueous polymer compound (c) having a property to form a physical gel in the graft copolymer (b) includes a method in which the aqueous polymer compound (c) is mixed with a latex of the graft copolymer (b), and the mixed latex is spray dried and co-coagulated, but is not limited to this.

It is preferred in the present invention to use a gelling agent together with the aqueous polymer compound (c) having a property to form a physical gel. More specifically, for example, a gelling agent is preferably added to a mixture of a latex of the graft copolymer and the aqueous polymer compound (c) having property to form a physical gel when recovering the graft copolymer (b) from the latex.

### (Gelling agent)

In the present invention, the gelling agent that can be used in a method for forming a physical gel of the aqueous polymer compound (gelling method) is not particularly limited, but includes an inorganic salt and an acid. As the inorganic salt and the acid, for example, inorganic salts such as sodium chloride, potassium chloride, lithium chloride, sodium bromide, potassium bromide, lithium bromide, potassium iodide, lithium iodide, potassium sulfate, ammonium sulfate, sodium sulfate, ammonium chloride, sodium nitrate, potassium nitrate, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum and iron alum; inorganic acids such as hydrochloric acid, sulfuric acid, nitric acid or phosphoric acid; organic acids such as acetic acid or formic acid; and salts of organic acid, such as sodium acetate, calcium acetate, sodium formate or calcium formate can be used alone or as a mixture.

Of those, inorganic salts such as sodium chloride, potassium chloride, ammonium sulfate, sodium sulfate, ammonium chloride, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum or iron alum; inorganic acids such as hydrochloric acid, sulfuric acid, nitric acid or phosphoric acid; and organic acids such as acetic acid or formic acid can preferably be used alone or as a mixture of two or more thereof.

In the present invention, when an aqueous alginic acid derivative is used as the aqueous polymer compound (c) having a property to form a physical gel, calcium chloride, magnesium sulfate, magnesium chloride, ferrous sulfate, ferrous chloride, ferric chloride, ferric sulfate, aluminum sulfate or the like can preferably be used as a gelling agent.

The addition amount of the gelling agent is not particularly limited. Most gelling agents can be washed out by water at washing step curried out during recovery of the graft copolymer, and the gelling agent remains in an amount of preferably less than 1 parts by weight, and more preferably 0.01 to 0.5 parts by weight, per 100 parts by weight of the graft copolymer (b). Where the residual amount of the gelling agent exceeds 1 parts by weight per 100 parts by weight of the graft copolymer (b), for example, there is the possibility that processability changes when compounded with a thermoplastic resin such as a vinyl chloride-based resin and molded, and there is the tendency that high impact resistance effect is difficult to exhibit. In addition to those, there is the possibility of the problem such that a molded article turns yellow.

The use amount of the gelling agent at the time of recovery of the graft copolymer (b) is not particularly limited so long as the residual amount of the gelling agent is less than 1 parts by weight per 100 parts by weight of the graft copolymer (b). However, from the standpoints of ease of recovery and production cost, the use amount is preferably 0.2 to 20 parts by weight, and more preferably 1 to 10 parts by weight, per 100 parts by weight of the graft copolymer (b).

In the present invention, the purposes for containing the aqueous polymer compound (c) preferably together with the gelling agent in the thermoplastic resin composition of the present invention, or in an impact modifier containing the graft copolymer (b) and the aqueous polymer compound (c) having a property to form a physical gel are that: (1) due to that non-sticky physical gel is co-present in coagulated particles of the graft copolymer, anti-blocking property of coagulated particles in the middle of recovery and form retention of coagulated particles (impacting elasticity to coagulated particles) are to be improved, and (2) due to that a dried product of non-sticky physical gel is co-present in coagulated particles even after drying coagulated particles, anti-blocking property of coagulated particles and form retention of coagulated particles (impacting elasticity to coagulated particles) are to be improved, thereby suppressing coarsening and agglomeration.

### (Anti-caking agent)

In the present invention, the composition containing the graft copolymer (b), the aqueous polymer compound (c) having a property to form a physical gel and the gelling agent can be used as an impact modifier by compound with a thermoplastic resin. The anti-caking agent can further be added in an amount of 0.05 to 3.0 parts by weight, preferably 0.1 to 3.0 parts by weight, and more preferably 0.2 to 2. 5 parts by weight. This makes it possible to satisfy improvement in impact resistance of the thermoplastic resin and balance to other quality in high level by using the impact modifier of which coarsening and agglomeration are suppressed, which is the object of the present invention.

An anti-caking agent that can be used in the present invention is not particularly limited. From the point that quality such as an effect of improving impact resistance, and an effect of suppressing coarsening and agglomeration can be satisfied in higher level, for example, a crosslinked polymer, silicone oil and/or polyvalent metal salts of anionic surfactant can be used. Of those, a crosslinked polymer and/or the polyvalent metal salts of a cationic surfactant can preferably be used.

The crosslinked polymer usable in the above purpose is not particularly limited. A crosslinked polymer obtained by polymerizing 30% to 60% by weight of methyl methacrylate, 65% to 35% by weight of an aromatic vinyl monomer, 0.1% to 25% by weight of a crosslinkable monomer and 0% to 30% by weight of other copolymerizable monomer can preferably be used from the point that quality such as an effect of improving impact resistance, and an effect of suppressing coarsening and agglomeration can be satisfied in higher level. However, the crosslinked polymer is not limited to this.

Examples of the aromatic vinyl monomer used in the polymerization of the crosslinked polymer include styrene and α-methylstyrene. Examples of the crosslinkable monomer include compounds having at least two functional groups in one molecule, such as divinylbenzene, 1,3-butyleneglycol dimethacrylate, trimethylolpropane tri(meth)acrylate, allyl (meth)acrylate, ethyleneglycol di(meth)acrylate, 1,4-butanediol di(meth)acrylate, 1,6-hexanediol (meth)acrylate, diallyl maleate, diallyl itaconate, allyl (meth)acrylate, triallyl cyanurate, triallyl isocyanurate, diallyl phthalate or triallyl trimesate.

Examples of other copolymerizable monomer used in the polymerization of the crosslinked polymer include vinyl cyan compounds such as acrylonitrile or methacrylonitrile; acrylic acid; methacrylic acid; alkyl esters of acrylic acid; and alkyl esters of methacrylic acid.

Silicone oil usable in the above purpose is not particularly limited. Organosiloxanes or polyorganosiloxanes, having siloxane bond can preferably be used from the point that quality such as an effect of improving impact resistance, and an effect of suppressing coarsening and agglomeration can be satisfied in high level. However, the silicon oil is not limited to those.

Examples of the polyvalent metal salts of a cationic surfactant usable in the above purpose include fatty acid salts, sulfuric esters of higher alcohols, sulfuric ester salts of liquid fatty oils, sulfuric acid salts of aliphatic amines and aliphatic amides, phosphoric esters of aliphatic alcohols, sulfonic acid salts of dibasic fatty acid esters, sulfonic acid salts of aliphatic amides, alkyl allyl sulfonic acid salts and formalin-condensed naphthalenesulfonic acid salts. Above all, fatty acid salts, sulfuric esters of higher alcohols, and sulfonic acids salt of dibasic fatty acid esters are preferably used from the point that quality such as an effect of improving impact resistance, and an effect of suppressing coarsening and agglomeration can be satisfied in high level. However, the polyvalent metal salts are not limited to those.

### (Processing aid (d))

The processing aid (d) in the present invention is described below.

The thermoplastic resin composition of the present invention contains the processing aid (d) in a range of 0.01 to 10 parts by weight per 100 parts by weight of the graft copolymer (b). It is more preferred to contain in a range of 0.1 to 5 parts by weight.

Where the content of the processing aid (d) exceeds 10 parts by weight, there is the case that recovered powder is coarsened or agglomerated, the powder may be recovered according to the following preferred manner; mixing the graft copolymer (b) in a latex state and the processing aid (d) in a latex state to form a graft copolymer/processing aid mixed latex, and recovering a powder as an impact modifier from the latex by co-coagulating or drying. As a result, there is the case that an effect of improving impact resistance is difficult to be exhibited, which is not preferred.

Contrary to this, where the content is less than 0.01 parts by weight, it may be difficult to achieve an effect of restoring or further promoting dispersibility of the graft copolymer (b) in the thermoplastic resin (a) by the processing aid (d), wherein the dispersibility is deteriorated by the aqueous polymer compound (c). In the preferred embodiment of the present invention, the graft copolymer (b) in a latex state and the aqueous polymer compound (c) having a property to form a physical gel are mixed to form a graft copolymer/aqueous polymer mixed latex, followed by recovering an impact modifier powder.

It is preferred that the processing aid (d) is used in a form of, for example, being contained in the graft copolymer (b). A method for containing the processing aid (d) in the graft copolymer (b) is not particularly limited. There is the tendency that an effect of improving impact resistance of the thermoplastic resin is improved by mixing in the state such that those are present finely and uniformly as possible. By obtaining a uniform mixture as above, dispersibility of the graft copolymer in the thermoplastic resin at the time of mold processing is accelerated, and a molded article free of defective dispersion and having significantly excellent impact resistance can be obtained.

In order to contain the processing aid (d) in the graft copolymer (b), following method is preferably conducted; mixing the processing aid (d) in a latex state and the graft copolymer (b) in a latex state to obtain graft copolymer/porcessing aid mixed latex, and then spray drying or co-coagulating. According to this method, those can be mixed into extremely fine and uniform state. Alternatively, a method of dispersing the processing aid (d) polymerized by bulk polymerization in water using an emulsifier or a dispersant to form an emulsion, mixing the emulsion with the graft copolymer (b) in a latex state, and spray drying and co-coagulating the mixture is similarly an effective method for achieving the object of the present invention. It is preferred that the powder thus obtained is compounded as an impact modifier with a thermoplastic resin.

The most preferred method for preparing the impact modifier according to the present invention is a method for recovering an impact modifier powder by mixing the graft copolymer (b) in a latex state and the processing aid (d) in a latex state to form a graft copolymer/processing aid mixed latex, mixing the graft copolymer/processing aid mixed latex and the aqueous polymer compound (c) to form a graft copolymer/processing aid/aqueous polymer mixed latex, and then co-coagulating and drying the latex. It is possible to suppress coarsening and agglomeration of the powder recovered, and both the graft copolymer (b) and the thermoplastic resin (a) can be present in the state that those are mutually mixed finely and uniformly. As a result, excellent effect of improving impact resistance can be achieved.

Tg of the processing aid (d) is preferably lower than 30°C, and more preferably lower than 0°C. Where Tg of the processing aid (d) is 30°C or higher, there is the tendency that melting rate of the processing aid (d) lowers. Therefore, there is the case that dispersibility of the graft copolymer (c) in the thermoplastic resin (a) cannot be accelerated up to the level of showing remarkable improvement of the strength depending on the processing conditions. The dispersibility is suppressed by the aqueous polymer compound (C) having a property to form a physical gel.

The weight average molecular weight of the processing aid (d) is preferably 5,000 to 300,000, and more preferably 10,000 to 50,000. Where the weight average molecular weight is less than 5,000, there is the case that blocking phenomenon such as coarsening, agglomeration or the like occurs because the processing aid (d) bleeds on the surface of the powder from the inside after granulation and drying and adhere powers with each other. Furthermore, there is the case that the processing aid (d) bleeds on the surface of a molded article to deteriorate the appearance. On the other hand, where the weight average molecular weight of the processing aid (d) exceeds 300,000, melting rate of the processing aid (d) is decreased, and depending on processing conditions there is the case that an effect of improving dispersibility suppressed by the aqueous polymer compound (c) having a property to form a physical gel, of the graft copolymer (b) in the thermoplastic resin to a sufficient level is not obtained, and significantly high impact resistance cannot be obtained. The processing aid (c) having the weight average molecular weight in the preferred range further has an effect of improving anti-adhesive property of a vinyl chloride-based resin to a high temperature metal surface to a level that stable calender molding, extrusion molding and injection molding are possible. The weight average molecular weight can be determined by, for example, dissolving a sample in tetrahydrofuran (THF), using gel permeation chromatography (510 Model pump 410RI486UV, available from WATERS) which uses a polystyrene as standard (sample solution: sample 20 mg/THF 10 ml, measurement temperature: 25°C, detector: differential refraction type, injection amount : 1 ml).

The weight average molecular weight of the processing aid (d) can be adjusted by the conventional methods. For example, there is a method of polymerizing a monomer mixture in the presence of a chain transfer agent. The kind of the chain transfer agent is not particularly limited. For example, alkyl mercaptans such as t-dodecyl mercaptan, n-dodecyl mercaptan, t-decyl mercaptan, n-decyl mercaptan or n-octyl mercaptan; and alkyl ester marcaptans such as 2-ethylhexyl thioglycolate can be used.

The processing aid (d) according to the present invention can be produced by, for example, an emulsion polymerization method, a suspension polymerization method, a bulk polymerization method, a microsuspension polymerization method, a miniemulsion polymerization method or an aqueous dispersion polymerization method. Oligomers or polymers, obtained by those methods can be used. Above all, an emulsion polymerization method can preferably be used from the standpoints that it is easy to control a volume average particle diameter of a polymer dispersion even in water, and a latex having high stability can be obtained.

The processing aid (d) is preferably obtained by polymerizing a monomer or a monomer mixture, comprising 0% to 100% by weight of a (meth) acrylic ester, 0% to 80% by weight of an aromatic vinyl monomer, and 0% to 20% by weight of other vinyl monomer copolymerizable with the (meth) acrylic ester and the aromatic vinyl monomer. More preferably, a monomer or a monomer mixture, comprising 0% to 60% by weight of methyl methacrylate, 0% to 80% by weight of an aromatic vinyl monomer, 20% to 100% by weight of a (meth) acrylic ester excluding the methyl methacrylate and 0% to 20% by weight of other vinyl monomer copolymerizable with those can be used.

Where the proportion of the methyl methacrylate exceeds 60% by weight, or where the proportion of the (meth)acrylic ester excluding the methyl methacrylate is less than 20% by weight, the glass transition temperature of the processing aid (d) is elevated, and melting rate at the time of mold processing is decreased. As a result, there is the case that good effect of improving dispersibility of the graft copolymer (b) in a thermoplastic resin is not achieved. Furthermore, where the proportion of the aromatic vinyl monomer exceeds 80% by weight, in the case of using a vinyl chloride-based resin as the thermoplastic resin, compatibility of the processing aid (d) with the vinyl chloride-based resin significantly deteriorates. As a result, there is the case that not only dispersion of the graft copolymer (d) in the vinyl chloride-based resin is not accelerated, but color tone of a molded article deteriorates, thereby impairing appearance.

The (meth)acrylic ester excluding the methyl methacrylate, as a constituent in the monomer mixture is preferably methacrylic ester having 2 to 8 carbon atoms in the alkyl moiety excluding the methyl methacrylate and/or acrylic ester having 1 to 8 carbon atoms in the alkyl moiety. Examples of the methacrylic ester having 2 to 8 carbon atoms in the alkyl moiety and/or the acrylic ester having 1 to 8 carbon atoms in the alkyl moiety include methacrylic alkyl esters such as ethyl methacrylate, propyl methacrylate, n-butyl methacrylate, i-butyl methacrylate, t-butyl methacrylate or 2-ethylhexyl methacrylate; and acrylic alkyl esters such as methyl acrylate, ethyl acrylate, propyl acrylate, n-butyl acrylate, 2-ethylhexyl acrylate or octyl acrylate. Examples of the other (meth)acrylic ester other than the above include methacrylic alkyl esters having 9 or more carbon atoms, such as lauryl methacrylate, stearyl methacrylate or tridecyl methacrylate; acrylic alkyl esters having 9 or more carbon atoms, such as lauryl acrylate, stearyl acrylate or tridecyl acrylate; glycidyl methacrylate, benzyl methacrylate, cyclohexyl methacrylate, 2-hydroxyethyl methacrylate, 4-hydroxylbutyl methacrylate, glycidyl acrylate, benzyl acrylate, cyclohexyl acrylate, 2-hydroxyethyl acrylate, and 4-hydroxylbutyl acrylate. Those can appropriately be used alone or as mixtures of two or more thereof. Above all, butyl methacrylate, butyl acrylate and 2-ethylhexyl acrylate are particularly preferred from the standpoint of industrially easy availability.

Examples of the aromatic vinyl monomer include styrene, α-methylstyrene, monochlorostyrene and dichlorostyrene. Styrene is more preferred. Examples of the other copolymerizable monomer include vinyl cyanide monomers such as acrylonitrile or methacrylonitrile; vinylcarboxylic acids such as acrylic acid or methacrylic acid; vinyl halides such as vinyl chloride, vinyl bromide or chloroprene; vinyl acetate; and maleimide compounds. Those can appropriately be used alone or as mixtures of two or more thereof.

### Examples

The present invention is described in more detail based on the Example, but the invention is not limited to only those Examples.

### (Example 1)

### (Preparation of butadiene-based rubbery polymer (R-1))

200 parts by weight of water, 1.5 parts by weight of sodium oleate, 0.002 parts by weight of ferrous sulfate (FeSO₄·7H₂O), 0.005 parts by weight of ethylenediamine tetraacetic acid-2Na salt, 0.2 parts by weight of formaldehyde sodium sulfoxylate, 0.2 parts by weight of tripotassium phosphate, 100 parts by weight of butadiene and 0.1 parts by weight of isopropylbenzene hydroperoxide were charged in a pressure-resistant polymerization vessel equipped with a stirrer and stirred at 50°C for 12 hours, thereby obtaining a rubber latex (R-1) with a rate of polymerization conversion of 97% and a weight average particle diameter of 0.09 µm.

### (Preparation of graft copolymer (G-1))

260 parts by weight of the rubber latex (R-1) (solid content: 86 parts by weight), 0.002 parts by weight of ferrous sulfate (FeSO₄-7H₂O), 0.004 parts by weight of ethylenediamine tetraacetic acid-2Na salt, 0.1 parts by weight of formaldehyde sodium sulfoxylate and 1.1 parts by weight of anhydrous sodium sulfate were placed in 8 liters glass-made polymerizer and stirred, and temperature was adjusted to 60°C. A mixed liquid of 12 parts by weight of methyl methacrylate and 0.05 parts by weight of tertiary butyl hydroperoxide was continuously added over 1.5 hours, and stirring was then continued for 30 minutes. A mixed liquid of 2 parts by weight of styrene and 0.1 parts by weight of tertiary butyl hydroperoxide was continuously added over 2 hours. Stirring was further continued for 1 hour, and the resulting mixture was then cooled to ordinary temperature (i.e. room temperature). Thus, a latex (G-1) of a graft copolymer having Tg of a hard shell of 105°C was produced. The volume average particle diameter of the graft copolymer particles was 0.18 µm.

### (Preparation of processing aid (P-1))

200 parts by weight of water, 1.0 parts by weight of sodium oleate, 0.002 parts by weight of ferrous sulfate (FeSO₄·7H₂O), 0.005 parts by weight of ethylenediamine tetraacetic acid-2Na salt and 0.4 parts by weight of formaldehyde sodium sulfoxylate were charged in a polymerization vessel equipped with a stirrer, and temperature was adjusted to 70°C. A mixed liquid of 30 parts by weight of methyl methacrylate, 70 parts by weight of n-butyl acrylate, 3 parts by weight of tertiary dodecyl mercaptan and 1.0 parts by weight of tertiary butyl hydroperoxide was added over 4 hours. Stirring was further continued for 2 hours, and the resulting mixture was then cooled to ordinary temperature. Thus, a latex (P-1) of the processing aid was prepared. The weight average molecular weight (Mw) of the processing aid (P-1) was 15,000.

### (Preparation of impact modifier (1-1))

An aqueous solution of sodium alginate (ALGITEX I-3G, available from Kimica Corporation) with a concentration of 1.5% by weight was added to a graft copolymer/processing aid mixed latex as a mixture of the latex (polymer solid content: 100 parts by weight) of the graft copolymer (G-1) and the latex (polymer solid content: 3 parts by weight) of the processing aid (P-1) such that the solid content of sodium alginate was 0.3 parts by weight per 100 parts by weight of the graft copolymer (G-1). The mixture was stirred to prepare a graft copolymer/processing aid/aqueous polymer mixed latex.

The mixed latex at a temperature of 5°C was sprayed using a pressure nozzle so as to form droplets having a volume average droplet diameter of about 200 µm. The sprayed latex droplets were coagulated by a coagulating liquid containing 0.4 parts by weight of a partially saponified polyvinyl alcohol (KH-17, available from Nippon Synthesis Chemical Industry Co., Ltd.) and 10 parts by weight of calcium chloride, per the polymer solid content of the graft copolymer (G-1), thereby obtaining an aqueous suspension of coagulated particles having a polymer solid content of about 10% by weight. The aqueous suspension obtained was heat treated, dehydrated and dried to prepare a white resin powder as an impact modifier (I-1).

### (Preparation of thermoplastic resin composition, preparation of molded article, and evaluation of impact strength)

100 parts by weight of a vinyl chloride-based resin (KANEVINYL S-1007, available from Kaneka Corporation), 1.2 parts by weight of tin stabilizer (TVS8831, available from Nitto Kasei Co., Ltd.), 0.8 parts by weight of an inner lubricant (ROXYOL G-11, available from Cognis Japan), 0.2 parts by weight of an outer lubricant (WAX E, available from Clariant Japan) and 7 parts by weight of the impact modifier (I-1) (containing 6.78 parts by weight of graft copolymer (G-1)) were kneaded at 165°C for 5 minutes using a 8 inches test roll, and the mixture was pressurized with a press at 180°C for 15 minutes to obtain a molded article having a thickness of 5.0 mm. Using this molded article, impact strength (Izod strength: 23°C) was measured according to JIS K7110. The result is shown in Table 1.

### (Evaluation of number of undispersed materials in molded article)

100 parts by weight of a vinyl chloride-based resin (KANEVINYL S-1007, available from Kaneka Corporation), 3.0 parts by weight of tin stabilizer (TVS8831, available from Nitto Kasei Co., Ltd.), 0.8 parts by weight of an inner lubricant (ROXYOL G-11, available from Cognis Japan), 1.0 parts by weight of a lubricant (WAX OP, available from Clariant Japan), 5.0 parts by weight of dioctyl phthalate and 15 parts by weight of the impact modifier (I-1) (containing 14.5 parts by weight of graft copolymer (G-1)) were mixed, melt extruded at 200 °C using a single-screw extruder having a diameter of 30 mm (available from Plagiken Co., Ltd.), and processed into a film having a thickness of 0.1 mm and a width of 17 cm by T-die. The surface of the film obtained was observed with CCD camera (available from Futec Inc.) over an area of 5,000 cm², image signal obtained was treated to count foreign matters of 200 µm or more, and this was designated as the number of undispersed materials of the impact modifier. The result is shown in Table 1.

### (Judgment of particle size)

The particle size of a resin powder of the impact modifier obtained was judged such that the powder having a volume average particle diameter of larger than 75 µm and smaller than 1,000 µm was a good powder and the powder having a volume average particle diameter of 1,000 µm or more was a coarsened powder.

### (Example 2)

An impact modifier (I-2) was prepared in the same manner as in Example 1 except that a processing aid (P-2) was prepared using a monomer composition shown in Table 1, and impact strength, the number of undispersed materials, and the like were evaluated. The results are shown in Table 1.

### (Example 3)

An impact modifier (I-3) was prepared in the same manner as in Example 1 except that a processing aid (P-3) was prepared using a monomer composition shown in Table 1, and impact strength, the number of undispersed materials, and the like were evaluated. The results are shown in Table 1.

### (Example 4)

An impact modifier (I-4) was prepared in the same manner as in Example 1 except that a processing aid (P-4) was prepared using a monomer composition shown in Table 1, and impact strength, the number of undispersed materials, and the like were evaluated. The results are shown in Table 1.

### (Example 5)

An impact modifier (I-5) was prepared in the same manner as in Example 1 except that a processing aid (P-5) was prepared using a monomer composition shown in Table 1, and impact strength, the number of undispersed materials, and the like were evaluated. The results are shown in Table 1.

### (Comparative Example 1)

An impact modifier (I'-1) was prepared in the same manner as in Example 1 except that a processing aid was not added, and impact strength, the number of undispersed materials, and the like were evaluated. The results are shown in Table 1.

### (Comparative Example 2)

An impact modifier (I'-2) was prepared in the same manner as in Example 1 except that sodium alginate was not added, and impact strength, the number of undispersed materials, and the like were evaluated. The results are shown in Table 1.

### (Comparative Example 3)

### (Preparation of graft copolymer (G'-1))

227 parts by weight of the rubber latex (R-1) (solid content: 75 parts by weight), 0.002 parts by weight of ferrous sulfate (FeSO₄·7H₂O), 0.004 parts by weight of ethylenediamine tetraacetic acid·2Na salt, 0.1 parts by weight of formaldehyde sodium sulfoxylate and 0.8 parts by weight of anhydrous sodium sulfate were placed in a 8 liters glass-made polymerizer and stirred, and temperature was adjusted to 60°C. A mixed liquid of 18 parts by weight of methyl methacrylate and 0.1 parts by weight of tertiary butyl hydroperoxide was continuously added over 1.5 hours, and stirring was further continued for 30 minutes. A mixed liquid of 7 parts by weight of styrene and 0.2 parts by weight of tertiary butyl hydroperoxide was continuously added over 2 hours. Stirring was further continued for 1 hour, and the resulting mixture was then cooled to ordinary temperature. Thus, a latex (G'-1) of a graft copolymer was produced. The volume average particle diameter was 0.18 µm.

An impact modifier (I'-3) was prepared in the same manner as in Example 1 except that the graft copolymer (G'-1) was used and a processing aid was not added, and impact strength, the number of undispersed materials, and the like were evaluated. The results are shown in Table 1.

### (Comparative Example 4)

An impact modifier (I' -4) was prepared in the same manner as in Example 1 except that the graft copolymer (G' -1) was used, and sodium alginate and a processing aid were not used, and impact strength, the number of undispersed materials, and the like were evaluated. The results are shown in Table 1.

**TABLE 1**

| | Example | | | | | Comparative Example | | | |
|---|---|---|---|---|---|---|---|---|---|
| | 1 | 2 | 3 | 4 | 5 | 1 | 2 | 3 | 4 |
| Rubber latex | R-1 | R-1 | R-1 | R-1 | R-1 | R-1 | R-1 | R-1 | R-1 |
| Monomer (parts by weight) Butadiene | 100 | 100 | 100 | 100 | 100 | 100 | 100 | 100 | 100 |
| Graft latex | G-1 | G-1 | G-1 | G-1 | G-1 | G-1 | G-1 | G'-1 | G'-1 |
| Amount of rubber (parts by weight) | 86 | 86 | 86 | 86 | 86 | 86 | 86 | 75 | 75 |
| Processing aid | P-1 | P-2 | P-3 | P-4 | P-5 | | P-1 | | |
| Monomer (parts by weight) MMA | 30 | - | - | 40 | - | | 30 | | |
| BA | 70 | 100 | - | 40 | 40 | | 70 | | |
| BMA | - | - | 100 | - | - | | - | | |
| 2EHA | - | - | - | 20 | - | | - | | |
| ST | | | - | - | 60 | | - | | |
| Processing aid (Mw) | 15000 | 15000 | 15000 | 15000 | 15000 | | 150D0 | | |
| Processing aid Tg (°C) | -22 | -54 | 20 | -8 | 20 | | -22 | | |
| Impact modifier | I-1 | I-2 | I-3 | I-4 | I-5 | I'-1 | I'-2 | I'-3 | I'-4 |
| Amount of physical gel (parts by weight) | 0.3 | 0.3 | 0.3 | 0.3 | 0.3 | 0.3 | None | 0.3 | None |
| Particle size | Good | Good | Good | Good | Good | Good | Coar sened | Good | Good |
| Number of undispersed material | 60 | 84 | 177 | 102 | 190 | 5235 | - | 2103 | 63 |
| Izod (kJ/m²) | 63 | 70 | 62 | 73 | 65 | 20 | - | 25 | 23 |

| | | | | | | | | | |
|---|---|---|---|---|---|---|---|---|---|
| MMA:Methyl methacrylate BA: n-Butyl acrylate BMA: n-Butyl methacrylate 2EHA: 2-Ethylhexyl acrylate ST: Styrene | | | | | | | | | |

It is seen from the comparison between Examples 1 to 5 and Comparative Example 1 that the thermoplastic resin composition of the present invention has less undispersed materials and has excellent appearance of a molded article, and a molded article exhibiting significantly high strength is obtained, while in Comparative Example 1 in which a processing aid is not used, a large number of undispersed materials is present, appearance of a molded article is poor, and strength is poor.

It is seen from the comparison between Example 1 and Comparative Example 2 that the aqueous polymer compound (c) having a property to form a physical gel has an effect of improving particle size of an impact modifier containing a graft copolymer of high rubber content.

It is seen from Comparative Examples 3 and 4 that where the rubber content of the graft copolymer is small, a resin powder having good particle size can be obtained without using the aqueous polymer compound having a property to form a physical gel, and the problem on the number of undispersed materials does not cause, but an effect of improving impact strength as in Examples 1 to 5 is not exhibited.

### (Example 6)

### (Preparation of butadiene-based rubbery polymer (R-2))

200 parts by weight of water, 1.5 parts by weight of sodium oleate, 0.002 parts by weight of ferrous sulfate (FeSO₄·7H₂O), 0.005 parts by weight of ethylenediamine tetraacetic acid·2Na salt, 0.2 parts by weight of formaldehyde sodium sulfoxylate, 0.2 parts by weight of tripotassium phosphate, 46 parts by weight of butadiene, 24 parts by weight of styrene and 0.1 parts by weight of diisopropylbenzene hydroperoxide were charged in a pressure-resistant polymerization vessel equipped with a stirrer and stirred at 50°C for 7 hours. 30 parts by weight of butadiene and 0.05 parts by weight of diisopropylbenzene hydroperoxide were added, and after 2 hours, 0.05 parts by weight of diisopropylbenzene hydroperoxide was further added. The resulting mixture was stirred for 5 hours, thereby obtaining a rubber latex (R-2) with a rate of polymerization conversion of 97% and a volume average particle diameter of 0.09 µm.

### (Preparation of graft copolymer (G-2))

248 parts by weight of the rubber latex (R-2) (solid content: 82 parts by weight), 0.002 parts by weight of ferrous sulfate (FeSO₄·7H₂O), 0.004 parts by weight of ethylenediamine tetraacetic acid·2Na salt, 0.1 parts by weight of formaldehyde sodium sulfoxylate and 1.5 parts by weight of anhydrous sodium sulfate were placed in 8 liters glass-made polymerizer and stirred, and temperature was adjusted to 60°C. A mixed liquid of 10 parts by weight of methyl methacrylate and 0.05 parts by weight of tertiary butyl hydroperoxide was continuously added over 1.5 hours, and stirring was further continued for 30 minutes. A mixed liquid of 8 parts by weight of styrene and 0.1 parts by weight of tertiary butyl hydroperoxide was continuously added over 2 hours. Stirring was further continued for 1 hour, and the resulting mixture was then cooled to ordinary temperature. Thus, a latex (G-2) of a graft copolymer was produced. The volume average particle diameter was 0.18 µm.

An impact modifier (I-6) was prepared in the same manner as in Example 1 except that the latex of the graft copolymer (G-2) was used, and impact strength, the number of undispersed materials, and the like were evaluated. The results are shown in Table 2.

### (Example 7)

An impact modifier (I-7) was prepared in the same manner as in Example 1 except that the graft copolymer (G-2) and the processing aid (P-2) were used, and impact strength, the number of undispersed materials, and the like were evaluated. The results are shown in Table 2.

### (Example 8)

An impact modifier (I-8) was prepared in the same manner as in Example 1 except that the graft copolymer (G-2) and the processing aid (P-3) were used, and impact strength, the number of undispersed materials, and the like were evaluated. The results are shown in Table 2.

### (Example 9)

An impact modifier (I-9) was prepared in the same manner as in Example 1 except that the graft copolymer (G-2) and the processing aid (P-4) were used, and impact strength, the number of undispersed materials, and the like were evaluated. The results are shown in Table 2.

### (Example 10)

An impact modifier (I-10) was prepared in the same manner as in Example 1 except that the graft copolymer (G-2) and the processing aid (P-5) were used, and impact strength, the number of undispersed materials, and the like were evaluated. The results are shown in Table 2.

### (Comparative Example 5)

An impact modifier (I'-5) was prepared in the same manner as in Example 6 except that the processing aid was not added, and impact strength, the number of undispersed materials, and the like were evaluated. The results are shown in Table 2.

### (Comparative Example 6)

An impact modifier (I'-6) was prepared in the same manner as in Example 6 except that sodium alginate was not added, and impact strength, the number of undispersed materials, and the like were evaluated. The results are shown in Table 2.

### (Comparative Example 7)

### (Preparation of graft copolymer (G'-2))

A latex (G'-2) of a graft copolymer was prepared in the same manner (preparation of graft copolymer (G-2)) of Example 6 except that the amount of the rubber latex (R-2) was changed to 227 parts by weight (solid content: 75 parts by weight). The volume average particle diameter was 0.18 µm.

An impact modifier (I'-7) was prepared in the same manner as in Example 1 except that the graft copolymer (G'-2) was used and a processing aid was not used, and impact strength, the number of undispersed materials, and the like were evaluated. The results are shown in Table 2.

### (Comparative Example 8)

An impact modifier (I'-8) was prepared in the same manner as in Example 1 except that the graft copolymer (G'-2) was used, and sodium alginate and a processing aid were not used, and impact strength, the number of undispersed materials, and the like were evaluated. The results are shown in Table 2.

**TABLE 2**

| | Example | | | | | Comparative Example | | | |
|---|---|---|---|---|---|---|---|---|---|
| | 6 | 7 | 8 | 9 | 10 | 5 | 6 | 7 | 8 |
| Rubber latex | R-2 | R-2 | R-2 | R-2 | R-2 | R-2 | R-2 | R-2 | R-2 |
| Monomer (parts by weight) Butadiene | 76 | 76 | 76 | 76 | 76 | 76 | 76 | 76 | 76 |
| ST | 24 | 24 | 24 | 24 | 24 | 24 | 24 | 24 | 24 |
| Graft latex | G-2 | G-2 | G-2 | G-2 | G-2 | G-2 | G-2 | G'-2 | G'-2 |
| Amount of rubber (parts by weight) | 82 | 82 | 82 | 82 | 82 | 82 | 82 | 75 | 75 |
| Processing aid | P-1 | P-2 | P-3 | P-4 | P-5 | | P-1 | | |
| Monomer (parts by weight) MMA | 30 | - | - | 40 | - | | 30 | | |
| BA | 70 | 100 | - | 40 | 40 | | 70 | | |
| BMA | - | - | 100 | - | - | | - | | |
| 2EHA | - | - | - | 20 | - | | - | | |
| ST | | | - | - | 60 | | - | | |
| Processing aid (Mw) | 15000 | 15000 | 15000 | 15000 | 15000 | | 15000 | | |
| Processing aid Tg (°C) | -22 | -54 | 20 | -8 | 20 | | -22 | | |
| Impact modifier | I-6 | I-7 | I-8 | I-9 | I-10 | I'-5 | I'-6 | I'-7 | I'-8 |
| Amount of physical gel (parts by weight) | 0.3 | 0.3 | 0.3 | 0.3 | 0.3 | 0.3 | None | 0.3 | None |
| Particle size | Good | Good | Good | Good | Good | Good | Coar sened | Good | Good |
| Number of undispersed material | 71 | 60 | 150 | 103 | 188 | 6595 | - | 2579 | 63 |
| Izod (kJ/m²) | 43 | 47 | 40 | 49 | 51 | 17 | - | 18 | 20 |

| | | | | | | | | | |
|---|---|---|---|---|---|---|---|---|---|
| MMA: Methyl methacrylate BA: n-Butyl acrylate BMA: n-Butyl methacrylate 2EHA: 2-Ethylhexyl acrylate ST: Styrene | | | | | | | | | |

It is seen from the comparison between Examples 6 to 10 and Comparative Example 5 that the thermoplastic resin composition of the present invention has less undispersed materials and has excellent appearance of a molded article, and a molded article exhibiting significantly high strength is obtained, while in Comparative Example 5 in which a processing aid is not used, a large number of undispersed materials is present, appearance of a molded article is poor, and strength is poor.

It is seen from the comparison between Example 6 and Comparative Example 6 that the aqueous polymer compound (c) having a property to form a physical gel has an effect of improving particle size of an impact modifier containing a graft copolymer of high rubber content.

It is seen from Comparative Examples 7 and 8 that where the rubber content of the graft copolymer is small, a resin powder having good particle size can be obtained without using the aqueous polymer compound having a property to form a physical gel, and the problem on the number of undispersed materials does not cause, but an effect of improving impact strength as in Examples 6 to 10 is not obtained.

## Claims

1. A thermoplastic resin composition comprising 100 parts by weight of a thermoplastic resin (a) and 0.5 to 20 parts by weight of a graft copolymer (b),
wherein the graft copolymer (b) comprises a butadiene-based rubbery polymer and a hard shell, and
the thermoplastic resin composition further comprises 0.01 to 3.0 parts by weight of an aqueous polymer compound (c) having a property to form a physical gel, and 0.01 to 10 parts by weight of a processing aid (d), per 100 parts by weight of the graft copolymer (b).

2. The thermoplastic resin composition according to claim 1, wherein the processing aid (d) is a polymer obtained by polymerizing a monomer mixture comprising 0% to 100% by weight of a (meth)acrylic ester, 0% to 80% by weight of an aromatic vinyl monomer, and 0% to 20% by weight of other vinyl monomer copolymerizable with the (meth) acrylic ester and the aromatic vinyl monomer, and having a weight average molecular weight of 5,000 to 300,000.

3. The thermoplastic resin composition according to claim 1 or 2, wherein the processing aid (d) is a polymer obtained by polymerizing a monomer mixture comprising 0% to 60% by weight of methyl methacrylate, 0% to 80% by weight of an aromatic vinyl monomer, 20% to 100% by weight of a (meth) acrylic ester excluding the methyl methacrylate, and 0% to 20% by weight of other vinyl monomer copolymerizable with those.

4. The thermoplastic resin composition according to any one of claims 1 to 3, wherein the glass transition temperature of the processing aid (d) is lower than 30°C.

5. The thermoplastic resin composition according to claim 4, wherein the glass transition temperature of the processing aid (d) is lower than 0°C.

6. The thermoplastic resin composition according to any one of claims 1 to 5, wherein the aqueous polymer compound (c) is one or more selected from the group consisting of hydroxyethylmethylcellulose, hydroxypropylmethylcellulose, carboxymethylcellulose, aqueous alginic acid derivatives, agar, gelatin, carrageenan, glucomannan, pectin, curdlan, gellan gum and polyacrylic acid derivatives.

7. The thermoplastic resin composition according to any one of claims 1 to 6, wherein the thermoplastic resin (a) is a vinyl chloride-based resin.

8. A process for preparing the thermoplastic resin composition according to any one of claims 1 to 7, comprising obtaining a powder from a mixed latex of the processing aid (d) in a latex form and the graft copolymer (b) in a latex form, and compounding the powder with the thermoplastic resin (a).
